Europäisches Patentamt

European Patent Office

Office européen des brevets

(19)

(11) EP 1 369 281 A1

(12) **DEMANDE DE BREVET EUROPEEN**

(43) Date de publication:
10.12.2003 Bulletin 2003/50

(51) Int Cl.$^7$: **B60K 6/04**, B60L 11/12, G05B 13/02

(21) Numéro de dépôt: 03354052.7

(22) Date de dépôt: 04.06.2003

(84) Etats contractants désignés:
AT BE BG CH CY CZ DE DK EE ES FI FR GB GR HU IE IT LI LU MC NL PT RO SE SI SK TR
Etats d'extension désignés:
AL LT LV MK

(30) Priorité: 05.06.2002 FR 0206921

(71) Demandeur: Peugeot Citroen Automobiles SA
78943 Vélizy-Villacoublay Cedex (FR)

(72) Inventeurs:
• Prou, Jean-Michel
92250 La Garenne Colombes (FR)
• De Wulf, Grégory
75006 Paris (FR)

(74) Mandataire: de Beaumont, Michel
Cabinet Michel de Beaumont
1, rue Champollion
38000 Grenoble (FR)

(54) **Procédé et dispositif de supervision du démarrage et de l'arrêt d'un moteur thermique dans un véhicule hybride série**

(57) L'invention concerne un procédé de supervision du démarrage et de l'arrêt d'un moteur thermique d'un véhicule, ledit moteur thermique étant susceptible de fournir un couple moteur à un arbre moteur relié aux roues du véhicule, une machine électrique (13) étant couplée sur l'arbre moteur et fournissant un couple d'assistance ($C_{ME}$) audit arbre, comprenant les étapes consistant à déterminer que des conditions de validation de démarrage ou d'arrêt sont remplies ; déterminer le couple d'assistance réellement fourni par la machine électrique ; et assister le démarrage ou l'arrêt du moteur thermique par la transmission d'une consigne de couple d'assistance (U) à la machine électrique, en fonction d'une consigne de régime ($\omega_C$) de moteur thermique et du couple d'assistance déterminé.

Fig 1

**Description**

La présente invention concerne un procédé et un dispositif de démarrage et d'arrêt d'un moteur thermique d'un véhicule hybride série.

Un véhicule hybride série comporte un moteur thermique couplé en série avec une machine électrique, le moteur thermique et la machine électrique pouvant fournir chacun un couple participant à l'entraînement des roues du véhicule.

La machine électrique assiste le moteur thermique dans ses différentes phases de fonctionnement et permet globalement de diminuer la consommation en carburant du moteur thermique.

Dans un véhicule classique, dans lequel l'entraînement des roues est assuré uniquement par le moteur thermique, le démarrage du moteur thermique est réalisé au moyen d'un démarreur. Le démarreur consiste généralement en un moteur électrique à fort couple, alimenté par une batterie du véhicule, qui engrène sur le volant moteur. Le démarreur entraîne en rotation le vilebrequin du moteur thermique jusqu'à un régime déterminé. A ce moment, un calculateur de contrôle de l'injection du moteur thermique commande une injection maximale, puis régule l'injection pour que le régime du moteur thermique se stabilise à un régime de ralenti. L'arrêt du moteur thermique est obtenu en stoppant l'alimentation en carburant du moteur thermique, le régime du moteur thermique s'annulant sous l'effet des couples résistifs du moteur thermique.

Dans un véhicule hybride, la machine électrique peut être utilisée pour assister les phases de démarrage ou d'arrêt du moteur thermique.

La présente invention propose un procédé original de commande de la machine électrique pour assister un démarrage et un arrêt de la machine thermique d'un véhicule hybride série.

Pour atteindre cet objet, la présente invention prévoit un procédé de supervision du démarrage et de l'arrêt d'un moteur thermique d'un véhicule, ledit moteur thermique étant susceptible de fournir un couple moteur à un arbre moteur relié aux roues du véhicule, une machine électrique étant couplée sur l'arbre moteur et fournissant un couple d'assistance audit arbre, comprenant les étapes consistant à déterminer que des conditions de validation de démarrage ou d'arrêt sont remplies ; déterminer le couple d'assistance réellement fourni par la machine électrique ; et assister le démarrage ou l'arrêt du moteur thermique par la transmission d'une consigne de couple d'assistance à la machine électrique, en fonction d'une consigne de régime de moteur thermique et du couple d'assistance déterminé.

Selon un mode de réalisation de l'invention, la consigne de couple d'assistance est fournie par une commande linéaire quadratique, à partir d'une consigne de régime de moteur thermique et de données issues d'un filtre de Kalman recevant le couple d'assistance déterminé fourni par la machine électrique.

Selon un mode de réalisation de l'invention, le filtre de Kalman reçoit également un signal de mesure du régime du moteur thermique.

Selon un mode de réalisation de l'invention, le filtre de Kalman fournit à la commande linéaire quadratique un estimé du couple résistif de l'arbre moteur hors machine électrique.

Selon un mode de réalisation de l'invention, le filtre de Kalman fournit à la commande linéaire quadratique un estimé du régime du moteur thermique.

Selon un mode de réalisation de l'invention, le filtre de Kalman fournit à la commande linéaire quadratique un estimé du couple d'assistance.

Selon un mode de réalisation de l'invention, la consigne de régime est préalablement filtrée avant d'être fournie à la commande linéaire quadratique.

Selon un mode de réalisation de l'invention, la machine électrique est alimentée par une batterie, une des conditions de validation d'arrêt du moteur thermique étant que l'état de charge de la batterie est supérieur à un état de charge déterminé.

Selon un mode de réalisation de l'invention, une des conditions de validation d'arrêt du moteur thermique est que la vitesse instantanée du véhicule soit inférieure à une vitesse instantanée déterminée et que la vitesse moyenne du véhicule soit inférieure à une vitesse moyenne déterminée.

Selon un mode de réalisation de l'invention, une des conditions de validation d'arrêt du moteur thermique est que la température du moteur thermique soit comprise dans une plage de températures déterminée.

Selon un mode de réalisation de l'invention, une des conditions de validation d'arrêt et de démarrage du moteur thermique est que le moteur thermique n'entraîne pas les roues du véhicule.

Selon un mode de réalisation de l'invention, le véhicule comprend des équipements électriques, une des conditions de validation d'arrêt du moteur thermique étant que la puissance électrique à fournir aux équipements électriques est inférieure à une puissance déterminée.

Selon un mode de réalisation de l'invention, une des conditions de validation d'arrêt du moteur thermique est que le moteur thermique ait été démarré depuis une durée supérieure à une durée déterminée.

La présente invention prévoit également un dispositif de supervision du démarrage et de l'arrêt d'un moteur thermique d'un véhicule, ledit moteur thermique fournissant un couple moteur à un arbre moteur relié aux roues du véhicule, une machine électrique étant couplée sur l'arbre moteur et fournissant un couple d'assistance audit arbre, dans lequel lors d'un arrêt ou d'un démarrage du véhicule, ledit dispositif transmet une consigne de couple d'assistance à la machine électrique en fonction d'une consigne de régime transmise par des moyens de détermination de consigne de régime, et du couple d'assistance réellement fourni par la machine électrique.

Cet objet, ces caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 représente, de façon schématique, un exemple d'architecture d'un véhicule hybride série selon l'invention ;
la figure 2 représente, sous forme d'un schéma par blocs, un exemple de commande selon l'invention de la machine électrique du véhicule hybride ;
les figures 3 et 4 représentent des courbes d'évolution de différents paramètres de fonctionnement du véhicule hybride lors d'un démarrage et d'un arrêt du moteur thermique pour des premières conditions d'utilisation ; et
les figures 5 et 6 représentent les mêmes courbes d'évolution des paramètres des figures 3 et 4 pour des deuxièmes conditions d'utilisation.

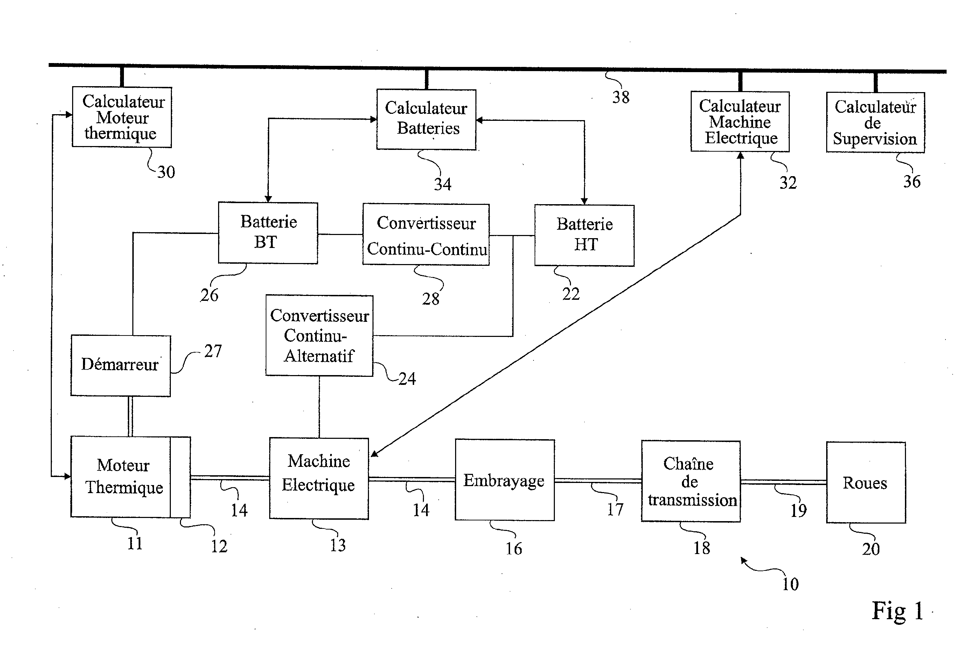

Comme cela est représenté sur la figure 1, le véhicule hybride 10 comprend un moteur thermique 11 associé à un volant moteur 12. Une machine électrique 13 est couplée sur l'arbre moteur 14. L'arbre moteur 14 est relié à un embrayage 16 qui, lorsqu'il est actionné, couple l'arbre moteur 14 à un arbre d'entrée 17 d'une chaîne de transmission 18. La chaîne de transmission 18 comprend, par exemple, une boîte de vitesses et un pont diviseur. La vitesse de rotation de l'arbre de sortie 19 de la chaîne de transmission 18 correspond à la vitesse de rotation de l'arbre d'entrée 17 multipliée par le rapport de réduction global de la chaîne 18. L'arbre de sortie 19 entraîne les roues 20 du véhicule. La boîte de vitesses peut être une boîte de vitesses manuelle classique, une boîte robotisée, une boîte automatique, une boîte continûment variable, etc. L'embrayage 16 peut, selon le type de boîte de vitesses, être automatique ou actionné par le conducteur. Le véhicule hybride 10 peut comporter, sur la ligne d'échappement pour l'évacuation des gaz d'échappement du moteur thermique 11, un catalyseur non représenté.

La machine électrique 13 est reliée à une batterie haute tension 22 par l'intermédiaire d'un convertisseur continu-alternatif 24. La machine électrique 13 peut fonctionner comme un alternateur, entraîné par le moteur thermique 11, et charger la batterie haute tension 22, ou bien fonctionner comme un moteur électrique, alimenté par la batterie haute tension 22, et entraîner l'arbre moteur 14.

La batterie haute tension 22 est reliée à une batterie basse tension 26 par l'intermédiaire d'un convertisseur continu-continu 28. La batterie basse tension 26 alimente un réseau de bord à basse tension du véhicule (non représenté) pour l'alimentation d'équipements classiques du véhicule 10 (par exemple des moyens de climatisation, des moyens d'essuyage, etc.). La batterie basse tension 26 peut alimenter également un démarreur classique 27 pouvant entraîner l'arbre moteur 14. La batterie haute tension 22 peut éventuellement alimenter un réseau de bord à haute tension pour l'alimentation d'équipements spécifiques du véhicule qui demandent une puissance élevée, comme par exemple des résistances de chauffage, une direction assistée, le chauffage électrique du catalyseur, etc. A titre d'exemple, la batterie basse tension 26 présente une tension moyenne de 12 volts, et la batterie haute tension 22 est une batterie de puissance de type NimH (Nickel-métal-Hydrure) de tension moyenne de 42 volts.

Le véhicule hybride 10 comporte plusieurs calculateurs 30, 32, 34, 36 qui commandent les différents éléments du véhicule hybride. Les calculateurs 30, 32, 34, 36 peuvent échanger entre eux des données par l'intermédiaire d'un bus d'échange de données 38. Un calculateur 30 de contrôle du moteur thermique est adapté à commander par exemple l'injection dans les chambres de combustion du moteur thermique 11 à partir de paramètres de fonctionnement du moteur thermique 11. Un calculateur 32 de contrôle de la machine électrique 13 est adapté à transmettre à la machine électrique 13 une commande de couple à partir de paramètres de fonctionnement de la machine électrique 13 et d'une consigne fournie par le calculateur 36. Le calculateur 32 peut également émettre, sur le bus de données 38, un signal d'alarme lorsqu'il détecte un dysfonctionnement de la machine électrique 13, du convertisseur continu-alternatif 24 ou du convertisseur continu-continu 28. Un calculateur 34 de contrôle des batteries 22, 26 est adapté, à partir de paramètres de fonctionnement des batteries haute tension 22 et basse tension 26, à, entre autres, émettre, sur le bus de données 38, un signal d'alarme lorsque certaines conditions de bon fonctionnement des batteries 22, 26 ne sont pas remplies. Un calculateur 36 de supervision peut commander les calculateurs 30, 32, 34 dans le but d'assurer des prestations particulières.

Les différents signaux utilisés par les calculateurs 30, 32, 34, 36 sont fournis par des capteurs, non représentés, équipant le véhicule hybride 10. Chaque capteur peut être relié directement à l'un des calculateurs 30, 32, 34, 36, et/ou à un autre calculateur, non représenté, lui-même relié au bus de données 38 ou à l'un des calculateurs 30, 32, 34, 36. Parmi ces capteurs, on peut distinguer :

- un capteur de la vitesse de rotation $\omega$ (régime) de l'arbre moteur 14 ;
- des moyens de détermination du couple $C_{ME}$ fourni par la machine électrique 13. Le couple peut être mesuré par un capteur spécifique ou estimé par le calculateur machine électrique 32 ;
- un capteur de la température de l'eau de refroidissement du moteur thermique 11 ;
- un capteur de la température de la batterie haute tension 22 ;
- un capteur adapté à fournir un signal indiquant qu'un démarrage du moteur thermique 11 est demandé par le conducteur. Il peut s'agir d'un capteur indiquant qu'une clé actionnée par le conducteur est dans une position spécifique, d'un bouton de démarrage présent sur le poste de conduite du véhicule dans le cas d'un véhicule sans clé, etc. ;
- un capteur de détection de rapport de vitesse, adapté à fournir un signal indiquant si le point mort de la boîte de vitesses est enclenché ;
- un capteur indiquant si l'embrayage 16 est actionné ;
- un capteur indiquant si la pédale d'accélérateur du véhicule 10 est actionnée par le conducteur ;
- un capteur de présence d'un conducteur dans le véhicule 10, pouvant consister en deux capteurs, l'un étant situé sur la portière du conducteur et l'autre sur la ceinture de sécurité du conducteur ou un ou plusieurs capteurs de pression disposés dans le siège du conducteur du véhicule 10 ;
- des moyens pour indiquer si le système de freinage du véhicule 10 est sollicité. De tels moyens peuvent constituer en un capteur indiquant si la pédale de frein est actionnée par le conducteur, un capteur de dépression dans le cas d'un système de freinage hydraulique ou par un calculateur contrôlant la fonction anti-blocage des roues (calculateur ABS) ;
- un capteur de la vitesse instantanée du véhicule 10 ;
- un capteur de la température du catalyseur ;
- des moyens pour indiquer un besoin en énergie électrique spécifique d'équipements du véhicule 10. De tels moyens peuvent consister en un calculateur qui contrôle les équipements du véhicule ;
- des moyens pour déterminer l'état de charge des batteries 22, 26. L'état de charge peut être déterminé par le calculateur batterie 34 à partir de la mesure du courant fourni par la batterie 22, 26.

Lors du fonctionnement normal du véhicule hybride, le moteur thermique 11 fournit à l'arbre moteur 14 un couple d'entraînement des roues 20. La machine électrique 13, alimentée par la batterie haute tension 22, peut fournir un couple d'entraînement additionnel pour assister le moteur thermique 11, ou fournir un couple résistif, qui s'oppose au couple d'entraînement, dans le but de produire de l'énergie électrique pour charger la batterie haute tension 22, ou la batterie basse tension 26, par l'intermédiaire du convertisseur continu-continu 28. Selon les conditions de fonctionnement du véhicule, le calculateur de supervision 36 fixe le couple à fournir par le moteur thermique 11 et le couple à fournir par la machine électrique 13 en transmettant des signaux de commande adaptés au calculateur moteur thermique 30, et au calculateur machine électrique 32, par l'intermédiaire du bus de données 38.

Le véhicule hybride 10 offre des prestations supplémentaires par rapport à un véhicule non hybride. Les prestations peuvent être activées ou inhibées au moyen d'un bouton de sélection, présent par exemple sur le tableau de bord du véhicule, et qui peut être actionné par le conducteur.

Le véhicule hybride permet d'arrêter le moteur thermique 11 selon deux modes d'arrêt. Le premier mode correspond à une coupure du moteur thermique 11 sollicitée par le conducteur du véhicule. Pour ce faire, le conducteur du véhicule actionne la clé de contact pour demander la coupure du moteur thermique 11. Le moteur thermique 11 est alors arrêté comme pour un véhicule non hybride.

Le second mode d'arrêt du moteur thermique 11 correspond à une prestation particulière du véhicule hybride 10, appelée arrêt automatique, et est initié par le calculateur de supervision 36, en l'absence d'une action directe du conducteur. Dans ce cas, l'arrêt du moteur thermique 11 est assisté par un couple fourni par la machine électrique 13, comme cela sera expliqué par la suite. Avant d'initier l'arrêt du moteur thermique 11 selon le deuxième mode d'arrêt, le calculateur de supervision 36 vérifie si un ensemble de conditions de validation d'arrêt automatique sont remplies.

Les conditions suivantes visent plus précisément à assurer la sécurité du conducteur du véhicule :

- le point mort de la boîte de vitesses 18 est enclenché ;
- l'embrayage 16 n'est pas débrayé ;
- la présence du conducteur dans le véhicule 10 est détectée ; et
- le système de freinage n'est pas sollicité. En effet, un système de freinage hydraulique nécessite par exemple généralement un moteur thermique tournant pour son bon fonctionnement.

Les conditions suivantes visent plus précisément à vérifier que les besoins en électricité du véhicule peuvent être satisfaits, c'est-à-dire à vérifier si l'arrêt du moteur thermique n'est pas préjudiciable au fonctionnement général du véhicule :

- la température du catalyseur est supérieure à un seuil déterminé. En effet, le catalyseur est généralement chauffé par les gaz d'échappement du moteur thermique 11 ; et
- la température de l'eau de refroidissement du moteur thermique 11 est supérieure à un seuil déterminé (par exemple de l'ordre de 80°C).

Les conditions suivantes visent plus précisément à vérifier la disponibilité des différents éléments participant à la fourniture d'énergie électrique du véhicule :

- le calculateur machine électrique 32 autorise l'arrêt du moteur thermique 11, signifiant ainsi, par exemple, l'absence de dysfonctionnements de la machine électrique 13 ou du convertisseur continu-alternatif 24 et du convertisseur continu-continu 28 ;
- le calculateur batterie 34 autorise l'arrêt du moteur thermique 11, signifiant ainsi, par exemple, l'absence de dysfonctionnements des batteries 22, 26 ; et
- l'état de charge de la batterie haute tension 22 est supérieur à un seuil déterminé.

Les conditions suivantes visent plus précisément à assurer que l'arrêt du moteur thermique n'entraîne pas de désagréments de conduite pour le conducteur :

- la prestation "arrêt du moteur thermique 11 par le calculateur de supervision 36" est sélectionnée par le conducteur ;
- la pédale d'accélérateur n'est pas actionnée ;
- il n'y a pas de besoin spécifique en énergie électrique des équipements de bord ;
- la vitesse instantanée du véhicule est inférieure à une vitesse déterminée ;
- la vitesse moyenne du véhicule est inférieure à un second seuil, permettant, par exemple, d'éviter un arrêt indésirable du moteur thermique à un péage d'autoroute ; et
- la durée écoulée depuis le dernier démarrage du moteur thermique 11 est supérieure à un seuil déterminé, permettant, par exemple, d'éviter un arrêt indésirable du moteur thermique lors de manoeuvres de parcage du véhicule 10.

Le véhicule hybride 10 permet de démarrer le moteur thermique 11 selon deux modes de démarrage.

Le premier mode correspond à une action volontaire du conducteur du véhicule sur la clé. Le calculateur de supervision 36 détermine si le démarrage du moteur thermique 11 peut être réalisé par la machine électrique 13. Pour cela, le calculateur de supervision 36 vérifie si les conditions suivantes sont remplies :

- la température de la batterie haute tension 22 est comprise dans une plage de températures donnée ;
- la température d'eau moteur est supérieure à un seuil déterminé ;
- l'état de charge de la batterie haute tension 22 est supérieur à un seuil déterminé ; et
- le calculateur de supervision 36 autorise le démarrage du moteur thermique 11 par la machine électrique 13, ce qui correspond à l'absence de dysfonctionnement des différents éléments participant à la fourniture d'énergie électrique du véhicule.

Dans l'affirmative, le démarrage du moteur thermique 11 est réalisé avec l'assistance de la machine électrique 13, qui joue le rôle d'un démarreur traditionnel. A titre d'exemple, le calculateur moteur thermique 30 injecte le maximum de carburant jusqu'à ce que le régime se stabilise au régime de ralenti. Dans la négative, le démarrage du moteur thermique 11 est réalisé avec l'assistance du démarreur 27.

Le second mode de démarrage du moteur thermique 11 correspond à une prestation particulière du véhicule hybride 10, appelée démarrage automatique, et est initié par le calculateur de supervision 36, en l'absence d'une action directe du conducteur. Un tel démarrage n'est envisageable qu'après un arrêt automatique du moteur thermique 11, c'est-à-dire lorsque le conducteur a volontairement sélectionné la prestation "arrêt du moteur thermique 11 par le calculateur de supervision 36". Le démarrage du moteur thermique 11 est assisté par un couple fourni par la machine électrique 13 comme cela sera détaillé par la suite. Avant d'autoriser le démarrage automatique du moteur thermique 11, le calculateur de supervision 36 vérifie que les conditions suivantes sont remplies :

- la présence du conducteur dans le véhicule 10 est détectée ;
- l'embrayage 10 est débrayé ;
- la boîte de vitesses 18 est au point mort ; et
- le calculateur batterie 34 autorise le démarrage du moteur thermique 11.

Les prestations d'arrêt et de démarrage automatiques permettent l'arrêt automatique du moteur thermique 11 dans des situations telles que, par exemple, une attente à un feu rouge. On obtient ainsi une diminution de la consommation en carburant du véhicule.

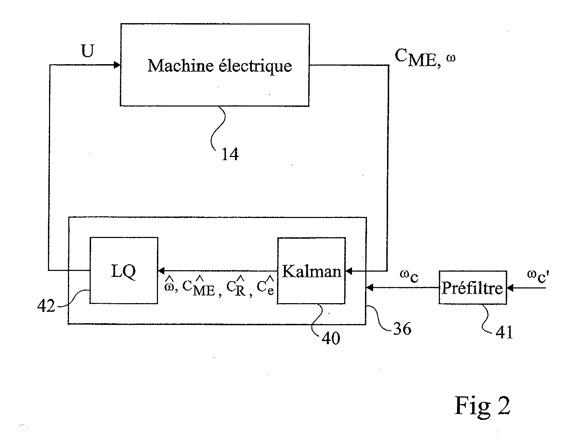

La figure 2 représente, sous forme d'un schéma par blocs, la commande de la machine électrique 13 lors d'un arrêt ou d'un démarrage du moteur thermique 11 sous l'initiative du calculateur de supervision 36. La machine électrique 13 est commandée par une consigne de couple U calculée par le calculateur de supervision 36 selon une stratégie de commande appelée commande H2, qui consiste en l'association d'un filtre de Kalman 40 et d'une commande 42 linéaire quadratique (LQ).

La modélisation retenue par la demanderesse pour intégrer dans la loi de commande le fonctionnement du groupe motopropulseur est la suivante :

$$I_{mots} \times \dot{\omega} = C_{ME} - C_R \tag{1}$$

$$\dot{C}_{ME} = a \times C_{ME} + b \times U + C_{erreur} \tag{2}$$

où $I_{mots}$ représente l'inertie du volant moteur 12, du moteur thermique 11, d'une partie de l'embrayage 16 et de la machine électrique 13, $C_R$ représente le couple résistif sur l'arbre moteur 14 hors machine électrique 13, $C_{erreur}$ représente l'erreur entre la consigne de couple U et le couple effectivement appliqué par la machine électrique $C_{ME}$, et a et b sont des coefficients de correction fonction de la dynamique de la machine électrique 14.

Le régime $\omega$ et le couple $C_{ME}$ peuvent être mesurés ou estimés. Les couples $C_R$ et $C_{erreur}$ ne sont pas facilement directement mesurables. C'est pourquoi, à partir des seules données $C_{ME}$ et $\omega$, le filtre de Kalman 40 détermine un régime reconstruit $\hat{\omega}$, un couple de machine électrique reconstruit $\hat{C}_{ME}$, un couple résistif estimé $\hat{C}_R$, et un couple d'erreur estimé $\hat{C}_{erreur}$. Le filtre de Kalman 40 reçoit également une consigne de régime $\omega_C$ correspondant à une consigne $\omega'_C$ fournie par le calculateur moteur thermique 30 et filtrée par un préfiltre 41. Le filtre de Kalman 40 fournit les différents signaux à la commande LQ 42 qui élabore une consigne de couple U de la machine électrique 13. Le préfiltre 41 permet d'ajuster la forme de la consigne de régime $\omega_C$ pour avoir une commande plus ou moins rapide.

Plus précisément, on définit le vecteur d'état X et le vecteur de mesure Y de la façon suivante :

$$X = \begin{bmatrix} \omega \\ C_{ME} \\ C_R \\ C_{erreur} \end{bmatrix} \quad (3) \qquad\qquad Y = \begin{bmatrix} \omega \\ C_{ME} \end{bmatrix} \quad (4)$$

Les équations (1) et (2) peuvent s'écrire, de façon discrète, sous la forme matricielle suivante :

$$X_k = A \cdot X_{k-1} + B \cdot U_{k-1} + W_{k-1} \tag{5}$$

$$X_k = \begin{bmatrix} 1 & T_e/I_{mots} & -T_e/I_{mots} & 0 \\ 0 & e^{-Te/T} & 0 & 1 \\ 0 & 0 & 1 & 0 \\ 0 & 0 & 0 & 1 \end{bmatrix} \cdot X_{k-1} + \begin{bmatrix} 0 \\ 1-e^{-Te/T} \\ 0 \\ 0 \end{bmatrix} \cdot U_{k-1} + W_{k-1}$$

$$Y_k = C \cdot X_k + V_k = \begin{bmatrix} 1 & 0 & 0 & 0 \\ 0 & 1 & 0 & 0 \end{bmatrix} \cdot X_k + V_k \tag{6}$$

où $T_e$ représente la période d'échantillonnage du superviseur de contrôle 36, T représente une constante de temps pour la modélisation d'une dynamique de premier ordre, et les vecteurs W et V représentent respectivement des vecteurs de bruit. On suppose que les bruits sont blancs, gaussiens, indépendants, et de matrices de covariance respectives $Q_0$ et $R_0$.

Le vecteur d'état reconstruit $\hat{X}$ optimal est donné par :

$$\hat{X}_k = A \cdot \hat{X}_{k-1} + B \cdot U_{k-1} + K_0 (Y_k - C \cdot \hat{X}_{k-1}) \qquad (7)$$

où $K_0$ est une matrice obtenue à partir de la solution $P_0$ de l'équation de Ricatti discrète suivante :

$$P_0 = A^T \cdot P_0 \cdot A - A^T \cdot P_0 \cdot C \cdot (C^T \cdot P_0 \cdot C + R_0)^{-1} \cdot A^T \cdot P_0 \cdot C + Q_0 \qquad (8)$$

$$K_0 = (C^T \cdot P_0 \cdot C + R_0)^{-1} \cdot C^T \cdot P_0 \cdot A \qquad (9)$$

Les matrices $Q_0$ et $R_0$ peuvent être déterminées, en fixant une constante scalaire $N_0$, de la façon suivante :

$$Q_0 = \left[ N_0 \sum_{i=0}^{N_0} (C \cdot A^i)^T C \cdot A^i \right]^{-1} \qquad (10)$$

$$R_0 = I \qquad (11)$$

Le choix de $N_0$ fixe les caractéristiques dynamiques du filtre de Kalman. L'utilisation du filtre de Kalman permet de s'adapter aux imprécisions liées aux capteurs habituellement utilisés dans l'industrie automobile.
La commande LQ 42 correspond à la minimisation d'un critère quadratique selon l'équation suivante :

$$J = \sum_{k=0}^{\infty} x_k{}^T Q_c x_k + u_k{}^T R_c u_k \qquad (12)$$

avec

$$x_k = \hat{X}_k - \begin{bmatrix} \omega_{Ck} \\ 0 \\ 0 \\ 0 \end{bmatrix} \qquad (13)$$

où $\omega_{Ck}$ correspond à la consigne de régime $\omega_C$ à l'instant k, et $Q_C$ et $R_C$ sont des matrices de pondération.
La commande $U_k$ à l'instant k optimale est donnée par :

$$U_k = -K_c x_k \qquad (14)$$

où $K_C$ est un vecteur obtenu à partir de la solution $P_C$ de l'équation de Ricatti discrète suivante :

$$P_C = A^T \cdot P_C \cdot A - A^T \cdot P_C \cdot B \cdot (B^T \cdot P_C \cdot B \cdot R_C)^{-1} \cdot A^T \cdot P_C \cdot B + Q_C \qquad (15)$$

$$K_C = (B^T \cdot P_C \cdot B + R_C)^{-1} \cdot B^T \cdot P_C \cdot A \tag{16}$$

Les matrices $Q_C$ et $R_C$ peuvent être définies à partir d'une constante scalaire $N_C$ de la façon suivante :

$$R_C = \left[ N_C \sum_{i=0}^{N_C} (A^i \cdot B)(A^i \cdot B)^T \right]^{-1} C^T \tag{17}$$

$$Q_C = C^T \cdot C \tag{18}$$

Le critère quadratique est basé sur des considérations énergétiques afin de minimiser l'énergie utile au démarrage. En outre, le critère quadratique est basé sur une minimisation du temps de démarrage ou d'arrêt. Ces deux critères étant antagonistes, on choisit un compromis. On prend également en compte l'agrément du conducteur dans la stratégie de commande afin de limiter d'éventuels surrégimes. Un tel surrégime serait provoqué par une commande trop rapide liée à de forts couples de la machine électrique et qui pourraient être ressentis de façon désagréable par le conducteur.

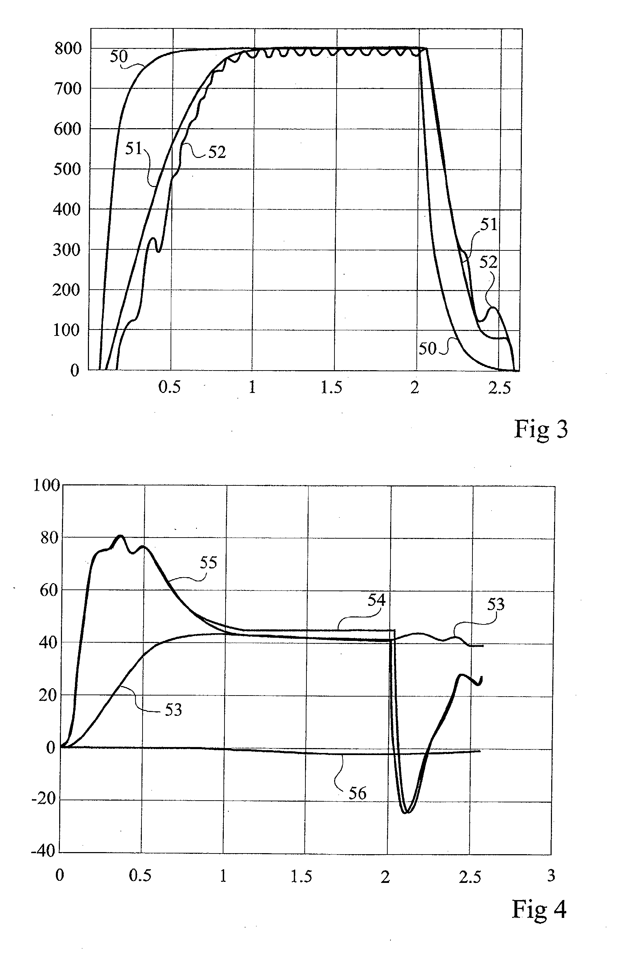

Sur la figure 3, la courbe 50 représente un exemple de consigne de régime $\omega_C$ pour un démarrage et un arrêt du moteur thermique 11. La courbe 51 représente le régime reconstruit $\hat{\omega}$ et la courbe 52 représente le régime mesuré $\omega$ de l'arbre moteur 14.

Sur la figure 4, la courbe 55 représente le couple résistif reconstruit $\hat{C}_R$, la courbe 56 représente la consigne de couple U, la courbe 57 représente le couple de la machine électrique reconstruit $\hat{C}_{ME}$. La courbe 58 représente l'estimation d'erreur $C_{erreur}$, correspondant à l'erreur entre le couple machine électrique reconstruit $\hat{C}_{ME}$ et le couple machine électrique mesuré ou estimé $C_{ME}$.

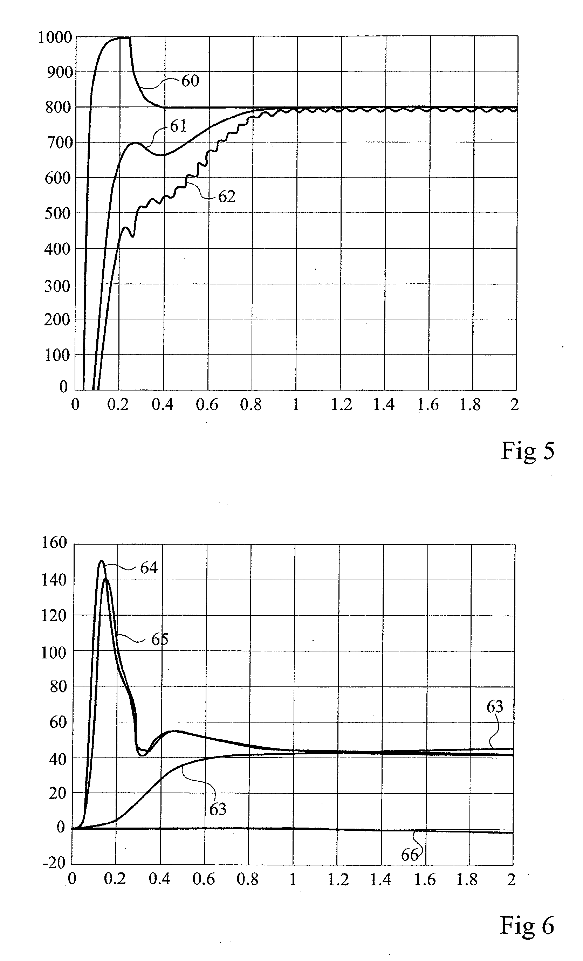

Sur les figures 5 et 6, les courbes 60 à 66 représentent respectivement les mêmes données que les courbes 50 à 56 des figures 3 et 4, pour une autre courbe 60 de consigne de régime $\omega_C$.

Pour les deux ensembles de courbes, le moteur thermique 11 n'est pas alimenté en carburant de sorte que le couple résistif $C_R$ s'oppose pendant toute la durée du démarrage au couple machine électrique $C_{ME}$. On constate que le couple de la machine électrique $C_{ME}$ converge bien vers le couple résistif $C_R$ indiquant ainsi que l'on arrive à un régime de ralenti stable, pour lequel il n'y a pas de variation de la vitesse de rotation de l'arbre moteur 14, et ce, quelle que soit la forme de la consigne de régime $\omega_C$, et quel que soit le calculateur moteur thermique 30 qui fournit la consigne $\omega_C$.

Dans le cas d'un démarrage réel, le calculateur moteur thermique 30 ajuste le débit du carburant injecté dans le moteur thermique 11 afin de minimiser la consommation du moteur thermique 11. Par exemple, l'injection de carburant peut être initiée lorsque le régime de l'arbre moteur 14 dépasse un seuil déterminé afin de limiter la consommation en carburant.

La commande de la machine électrique selon l'invention est donc particulièrement robuste puisqu'elle peut s'adapter à différentes consignes de régime et à différents couples résistifs du moteur thermique. La commande peut ainsi s'adapter à différents moteurs et à différents contrôles. Elle permet d'obtenir des arrêts et démarrages du moteur thermique sur de faibles durées, de l'ordre de 400 ms. La commande participe également à l'agrément de conduite, puisqu'elle limite, lors d'un démarrage automatique, l'écart maximum entre le régime moteur et la consigne de ralenti ("overshoot"). En outre, elle réduit, lors d'un arrêt automatique l'ébranlement du moteur thermique 11 en minimisant les effets des compressions et des détentes.

Bien entendu, la présente invention est susceptible de diverses variantes et modifications qui apparaîtront à l'homme de l'art. En particulier, les différents calculateurs pourraient être intégrés en un unique calculateur.

## Revendications

1. Procédé de supervision du démarrage et de l'arrêt d'un moteur thermique (11) d'un véhicule (10), ledit moteur thermique étant susceptible de fournir un couple moteur à un arbre moteur (14) relié aux roues (20) du véhicule, une machine électrique (13) étant couplée sur l'arbre moteur et fournissant un couple d'assistance ($C_{ME}$) audit arbre, **caractérisé en ce qu'**il comprend les étapes suivantes :

- déterminer que des conditions de validation de démarrage ou d'arrêt sont remplies ;
- déterminer le couple d'assistance réellement fourni par la machine électrique ; et
- assister le démarrage ou l'arrêt du moteur thermique par la transmission d'une consigne de couple d'assistance (U) à la machine électrique, en fonction d'une consigne de régime ($\omega_C$) de moteur thermique et du couple d'assistance déterminé.

2. Procédé selon la revendication 1, dans lequel la consigne de couple d'assistance (U) est fournie par une commande linéaire quadratique (42), à partir d'une consigne de régime ($\omega_C$) de moteur thermique et de données issues d'un filtre de Kalman (40) recevant le couple d'assistance ($C_{ME}$) déterminé fourni par la machine électrique (13).

3. Procédé selon la revendication 2, dans lequel le filtre de Kalman (40) reçoit également un signal de mesure du régime ($\omega$) du moteur thermique (11).

4. Procédé selon la revendication 2, dans lequel le filtre de Kalman (40) fournit à la commande linéaire quadratique (42) un estimé du couple résistif ($C_R$) de l'arbre moteur (14) hors machine électrique (13).

5. Procédé selon la revendication 2, dans lequel le filtre de Kalman (40) fournit à la commande linéaire quadratique (42) un estimé du régime ($\hat{\omega}$) du moteur thermique (11).

6. Procédé selon la revendication 2, dans lequel le filtre de Kalman (40) fournit à la commande linéaire quadratique (42) un estimé du couple d'assistance ($C_{ME}$).

7. Procédé selon la revendication 2, dans lequel la consigne de régime ($\omega_C$) est préalablement filtrée avant d'être fournie à la commande linéaire quadratique (42).

8. Procédé selon la revendication 1, dans lequel la machine électrique (13) est alimentée par une batterie (22), une des conditions de validation d'arrêt du moteur thermique (11) étant que l'état de charge de la batterie est supérieur à un état de charge déterminé.

9. Procédé selon la revendication 1, dans lequel une des conditions de validation d'arrêt du moteur thermique (11) est que la vitesse instantanée du véhicule (10) soit inférieure à une vitesse instantanée déterminée et que la vitesse moyenne du véhicule soit inférieure à une vitesse moyenne déterminée.

10. Procédé selon la revendication 1, dans lequel une des conditions de validation d'arrêt du moteur thermique (11) est que la température du moteur thermique soit comprise dans une plage de températures déterminée.

11. Procédé selon la revendication 1, dans lequel une des conditions de validation d'arrêt et de démarrage du moteur thermique (11) est que le moteur thermique n'entraîne pas les roues (20) du véhicule (11).

12. Procédé selon la revendication 1, dans lequel le véhicule comprend des équipements électriques, une des conditions de validation d'arrêt du moteur thermique (11) étant que la puissance électrique à fournir aux équipements électriques est inférieure à une puissance déterminée.

13. Procédé selon la revendication 1, dans lequel une des conditions de validation d'arrêt du moteur thermique (11) est que le moteur thermique ait été démarré depuis une durée supérieure à une durée déterminée.

14. Dispositif de supervision du démarrage et de l'arrêt d'un moteur thermique (11) d'un véhicule (20), ledit moteur thermique fournissant un couple moteur à un arbre moteur (14) relié aux roues (20) du véhicule, une machine électrique (13) étant couplée sur l'arbre moteur et fournissant un couple d'assistance ($C_{ME}$) audit arbre, **caractérisé en ce que**, lors d'un arrêt ou d'un démarrage du véhicule, ledit dispositif transmet une consigne de couple d'assistance (U) à la machine électrique en fonction d'une consigne de régime ($\omega_C$) transmise par des moyens de détermination de consigne de régime, et du couple d'assistance réellement fourni par la machine électrique.

EP 1 369 281 A1

Fig 1

U → Machine électrique → $C_{ME}$, $\omega$

14

LQ ← $\hat{\omega}$, $\hat{C_{ME}}$, $\hat{C_R}$, $\hat{C_e}$ ← Kalman ← $\omega_c$ ← Préfiltre ← $\omega_{c'}$

42    40    36    41

Fig 2

Fig 3

Fig 4

Fig 5

Fig 6

EP 1 369 281 A1

**Office européen des brevets**

**RAPPORT DE RECHERCHE EUROPEENNE**

Numéro de la demande
EP 03 35 4052

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 020 640 A (NISSAN MOTOR) 19 juillet 2000 (2000-07-19) * alinéa '0006!; revendications 19,12,18 * | 1,8-14 | B60K6/04 B60L11/12 G05B13/02 |
| X | US 6 274 943 B1 (YONEKURA TAKAHIRO ET AL) 14 août 2001 (2001-08-14) * revendication 1 * | 1,8-14 | |
| X | EP 0 839 683 A (TOYOTA MOTOR CO LTD) 6 mai 1998 (1998-05-06) * revendications 1,2 * | 1,8-14 | |
| X | EP 1 122 112 A (TOYOTA MOTOR CO LTD) 8 août 2001 (2001-08-08) * revendications 1,2 * | 1,8-11 | |
| A | RAJIVA PRAKASH: "ROBUST CONTROL OF AN INDUCTION MOTOR DRIVE WITH LYAPUNOV FILTER AND LINEAR QUADRATIC REGULATOR" PROCEEDINGS OF THE AMERICAN CONTROL CONFERENCE (ACC). CHICAGO, JUNE 24 - 26, 1992, NEW YORK, IEEE, US, vol. 2, 24 juin 1992 (1992-06-24), pages 1725-1731, XP000343591 ISBN: 0-7803-0210-9 * le document en entier * | 2-7 | **DOMAINES TECHNIQUES RECHERCHES (Int.Cl.7)** B60K B60L G05B |
| A | SCHLUETER F ET AL: "HIERARCHICAL CONTROL STRUCTURES FOR HYBRID VEHICLES - MODELLING, SIMULATION, AND OPTIMIZATION" ADVANCED INFORMATION PROCESSING IN AUTOMATIC CONTROL. SELECTED PAPERS FROM THR IFAC/IMACS/IFORS SYMPOSIUM, XX, XX, 1995, pages 115-120, XP001025618 * page 119, dernier alinéa * | 2-7 | |

-/--

Le présent rapport a été établi pour toutes les revendications

| Lieu de la recherche | Date d'achèvement de la recherche | Examinateur |
|---|---|---|
| LA HAYE | 9 octobre 2003 | Bufacchi, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

- & : membre de la même famille, document correspondant

14

**Office européen des brevets**

## RAPPORT DE RECHERCHE EUROPEENNE

Numéro de la demande

EP 03 35 4052

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | MASDING P W ET AL: "IDENTIFICATION AND PERFORMANCE SIMULATION OF A HYBRID I.C.-ENGINE/BATTERY ELECTRIC AUTOMOTIVE POWER TRAIN PART 2: THE ELECTRIC TRACTION SYSTEM" TRANSACTIONS OF THE INSTITUTE OF MEASUREMENT AND CONTROL, INSTITUTE OF MEASUREMENT AND CONTROL. DORKING, GB, vol. 12, no. 2, 1 avril 1990 (1990-04-01), pages 97-112, XP000125649 ISSN: 0142-3312 * le document en entier * --- | 2-7 | |
| T | FR 2 824 377 A (RENAULT) 8 novembre 2002 (2002-11-08) * le document en entier * ----- | 2-7 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 9 octobre 2003 | Bufacchi, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                             
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 35 4052

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-10-2003

| Document brevet cité au rapport de recherche | | Date de publication | Membre(s) de la famille de brevet(s) | | Date de publication |
|---|---|---|---|---|---|
| EP 1020640 | A | 19-07-2000 | JP | 2000205003 A | 25-07-2000 |
| | | | EP | 1020640 A2 | 19-07-2000 |
| | | | US | 6291902 B1 | 18-09-2001 |
| US 6274943 | B1 | 14-08-2001 | JP | 3347080 B2 | 20-11-2002 |
| | | | JP | 2000186654 A | 04-07-2000 |
| EP 0839683 | A | 06-05-1998 | CN | 1328936 A | 02-01-2002 |
| | | | CN | 1181322 A ,B | 13-05-1998 |
| | | | DE | 69709033 D1 | 24-01-2002 |
| | | | DE | 69709033 T2 | 22-08-2002 |
| | | | EP | 1122112 A2 | 08-08-2001 |
| | | | EP | 0839683 A2 | 06-05-1998 |
| | | | JP | 3216589 B2 | 09-10-2001 |
| | | | JP | 10306739 A | 17-11-1998 |
| | | | KR | 253856 B1 | 15-04-2000 |
| | | | US | 6278195 B1 | 21-08-2001 |
| EP 1122112 | A | 08-08-2001 | EP | 1122112 A2 | 08-08-2001 |
| | | | CN | 1328936 A | 02-01-2002 |
| | | | CN | 1181322 A ,B | 13-05-1998 |
| | | | DE | 69709033 D1 | 24-01-2002 |
| | | | DE | 69709033 T2 | 22-08-2002 |
| | | | EP | 0839683 A2 | 06-05-1998 |
| | | | JP | 3216589 B2 | 09-10-2001 |
| | | | JP | 10306739 A | 17-11-1998 |
| | | | KR | 253856 B1 | 15-04-2000 |
| | | | US | 6278195 B1 | 21-08-2001 |
| FR 2824377 | A | 08-11-2002 | FR | 2824377 A1 | 08-11-2002 |
| | | | EP | 1255175 A1 | 06-11-2002 |

EPO FORM P0460

Pour tout renseignement concernant cette annexe : voir Journal Officiel de l'Office européen des brevets, No.12/82